(19) Europäisches Patentamt

European Patent Office

Office européen des brevets

(11) **EP 4 015 062 A1**

(12) **EUROPEAN PATENT APPLICATION**

(43) Date of publication:
**22.06.2022 Bulletin 2022/25**

(21) Application number: **21214211.1**

(22) Date of filing: **14.12.2021**

(51) International Patent Classification (IPC):
**B01D 53/56** (2006.01)  **B01D 53/79** (2006.01)
**F23J 15/00** (2006.01)

(52) Cooperative Patent Classification (CPC):
**B01D 53/56; B01D 53/79; F23J 15/003;**
B01D 2251/2062; B01D 2257/404; B01D 2258/0283

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.12.2020 CN 202011479611**

(71) Applicant: **EDF (China) Holding Ltd.
Beijing 100005 (CN)**

(72) Inventor: **WANG, Lei
BEIJING, 100000 (CN)**

(74) Representative: **Plasseraud IP
66, rue de la Chaussée d'Antin
75440 Paris Cedex 09 (FR)**

(54) **METHOD OF CONTROLLING LANCES IN SNCR SYSTEM**

(57)     The invention relates to a method for controlling lances in a SNCR system, wherein the SNCR system comprises a plurality of lances, being configured to be distributed at different levels inside a boiler of the SNCR system and being configured to be capable of injecting reagents into the boiler to remove nitrogen oxides from nitrogen oxide containing flue gases, the method comprising: - collecting operating data, when the boiler is operating normally and the lance is opened in a random manner; - estimating, by means of a mathematical equation, nitrogen oxides level after an operation of the SNCR system, wherein the nitrogen oxides level in said mathematical equation is a function of initial nitrogen oxides emissions before operation of the SNCR system; - calibrating the mathematical equation using the collected data; and - optimizing the lance operation by means of the calibrated mathematical equation to determine the lances to be used and the amount of reagent to be injected in order to reduce the amount of reagent to be injected and/or to increase the removal of nitrogen oxides. The present invention enables efficient optimization of lance operation to reduce the amount of reagent to be used and/or increase NOx removal without substantial hardware modifications to existing SNCR systems.

**FIGURES**

```
ARRANGE LANCES ON THE BOILER WALL          S0
                    |
                    v
TEST AND COLLECT DATA                      S1
                    |
                    v
ESTABLISH SEMI-PHYSICAL MODEL
EQUATION FOR ESTIMATION, USE               S2
COLLECTEDDATA FOR CALIBRATION
                    |
                    v
OPTIMIZATION BY CALIBRATED
EQUATION                                   S3

SELECTION OF OPTIMAL LANCES AND
REAGENT AMOUNT
```

Fig. 1

**EP 4 015 062 A1**

**Description**

**FIELD OF INVENTION**

The present invention relates to the field of boiler control optimization in thermal power plants, in particular to, the optimization of lance control in a SNCR system.

**BACKGROUND**

In a thermal power plant, the combustible (coal for a coal-fired plant and biomass for a biomass plant) releases heat by means of a combustion reaction with oxygen from the air in a boiler, and then thermal energy is converted into electrical energy through power generating units. Finally, the combusted flue gas is evacuated by chimney.

The Flue gas mainly contains $CO_2$ and $H_2O$, and also contains minor components, such as nitrogen oxides ($NO_x$), sulphur oxides ($SO_x$) and airborne particulate or flyash etc, which are air pollutant.

Selective Non-Catalytic Reduction (SNCR) is a classical technology used in industrial scale denitrification. In a SNCR system, ammonia ($NH_3$) is injected from boiler lateral walls in order to react with $NO_x$, forming $N_2$. Temperature in certain zone of the boiler is satisfactory to trigger the desired reaction without the use of catalyst. Due to its low cost and simple operation logics, large number of SNCR systems can be found in large scale coal-fired power plants, metallurgical factories and smaller scale biomass power plants.

Conventionally, a SNCR system can remove around 50% of NOx generated in the boiler, with an initial NOx in a range between 300 to 1000 mg/Nm3.

In a SNCR system in the art, the system is designed following the following simple logic:

1. Estimate the temperature distribution inside of the boiler based on nominal operating conditions;

2. Install 8 to 12 lances by at most two layers on the boiler lateral walls in order to cover as much as possible the optimal reaction temperature zone (850-950 degrees Celsius) and avoid non-optimal temperature zones inside of the boiler.

In operation, some or all lances are opened to inject an aqueous $NH_3$ solution into the boiler.

The conventional design and operation are simple whereas the efficiency of $NO_x$ removal is quite low. The main reason is that the dynamics inside of the boiler varies a lot while operating conditions are changing. In particular, in a biomass boiler, the temperature distribution depends mainly on the fuel used in the process. Therefore, the estimation based on nominal conditions is not reliable, and a lot of lances inject $NH_3$ outside of optimal reaction temperature zone, which greatly diminishes the removal effect.

To solve this problem, in the art, researchers may think of increasing $NO_x$ removal efficiency by injecting excess reagent $NH_3$ into the boiler. However, on the one hand, $NH_3$ is injected as an aqueous solution, and large amount of NH3 solution injection will bring more droplets into the boiler and thus modify the spraying rate. Thus, the evaporation time of liquid would be enlarged and the reaction time between the active $NH_3$ molecules with $NO_x$ could thus be reduced. As a result, the $NO_x$ removal efficiency is usually capped at 60%. On the other hand, excess $NH_3$ will be carried out by the flue gas to chimney. These escaped $NH_3$ is considered as a pollutant in most of countries. Therefore, in practice, it is not recommended to use more than twice of Normal Stoichiometric Ratio (NSR) of $NH_3$.

Furthermore, researchers also work on better estimating the temperature distribution inside of the boiler and understanding lance spray trajectories, to inject $NH_3$ efficiently to cover the optimal reaction temperature region as much as possible. Reynolds Averaged Navier-Stokes (RANS or steady simulations) and large eddy simulation (LES or unsteady simulations) have been used to understand and optimise real systems, up to very refined simulations of SNCR operations in complex geometries. However, these types of study stay only at research stage as the computational requirement is extremely high and input data collection is complex. Now, it is not possible to run online simulation at every change of input conditions so that no industrial practise has been observed.

To adapt to the temperature distribution variations inside of the boiler, some researchers propose to install more lances and temperature measurement devices on the boiler. Lances will only be opened to inject $NH_3$ into the boiler, when the temperature measurement is at the optimal range. Thermocouples are low-cost devices to acquire temperature measurement, whereas research shows they have serious uncertainties. For instance, some research shows at 1150K (877 degrees Celsius), the percent error in measured temperature of the thermocouples could be as high as 38%, which will make it impossible to select the optimal temperature range based on the measured data.

In addition, in the art, Acoustic Gas Temperature Measurement (AGAM) system has been developed to measure temperature inside of a boiler. AGAM measures the flight time of ultrasound emitted and received from the system in order to determine the temperature. This measurement is of higher accuracy and more robust. However, the AGAM system requires an important investment, for example, a basic version is 1-2 times more expensive than the SNCR system itself. It is thus not cost effective to install such a system in a small-scale boiler.

Given that 50% removal efficiency in many industries is no longer sufficient to meet emission control standards in many countries, especially for NOx emissions, in the art, though SNCR is still considered as the most cost effective method in denitrification, a 50% removal efficiency is still insufficient to reduce the NOx content below the standard. For large scales, one can choose to install an AGAM system to assist the operation, wherein the impact of high cost of AGAM may not be too significant. Another common solution in large scales is to install a complement denitrification system such as Selective Catalytic Reduction (SCR) to further reduce NOx content. In addition, to adapt smaller scales, a Low Temperature Oxidation (LoTOx) process is proposed in the art to assist the denitrification as a complement to SNCR. However, all these modifications are largely more expensive than conventional SNCR system and bring some more significant drawbacks. Therefore, it is ideal to keep SNCR in the denitrification system and optimise SNCR efficiency to minimise usage of these complements for a global optimal operation cost.

Thus, how to improve the efficiency of SNCR systems on an industrial scale is a well-known and urgent problem to be solved.

## SUMMARY OF INVENTION

It should be noted that the purpose of the present invention is to overcome one or more drawbacks that have been found in the background art.

To this end, according to one aspect of the present invention, the present invention provides a method of controlling lances in a SNCR system, wherein the SNCR system comprises a plurality of lances which are configured to be distributed at different levels inside a boiler of the SNCR system and are configured to inject reagent into the boiler to remove nitrogen oxides in nitrogen oxide-containing flues gases, and the method comprises:

- collecting operating data when the boiler is operating in a normal operation and the lances are opened in a random way;

- estimating nitrogen oxides level after an operation of the SNCR system by a mathematical equation, wherein in the mathematical equation the nitrogen oxides level is in function of initial nitrogen oxides emission before SNCR system operation;

- calibrating the mathematical equation using the collected operating data; and

- optimizing lance operation by means of the calibrated mathematical equation to determine the lances and the amount of reagent to be used, to lower the amount of reagent to be injected and/or increase the removal of the nitrogen oxides.

Through the method of the present invention, in a traditional SNCR system, the method according to the present invention can be used to control the lance in-boiler reagent injection and optimize the use of the lances, to improve the overall efficiency and reduce the amount of reagent.

Preferably, according to an embodiment of the present invention, said reagent is $NH_3$ and the mathematical equation is as follows:

$$[NO] = [NO]_0 - \sum_{i=1}^{m} a_{L_i}[NH3]_i$$

wherein $[NO]$ is the nitrogen oxides level after the operation of the SNCR system, $[NO]_0$ is the initial nitrogen oxides emission before the operation of the SNCR system, $a_{Li}$ is a combination of artificial coefficients to represent contributions of each SNCR lance, m is the number of the lances in the boiler, and $[NH3]$ is the flow rate of $NH_3$ injected by each lance. Therefore, the temperature does not need to be explicitly listed in the method of the present invention. As mentioned above, only through expensive equipment (such as AGAM technology) can accurate temperature measurement be achieved. The invention cleverly combines the influence of the lance position and the influence of the temperature at the lance position into the mathematical coefficient $a_{Li}$. In addition, this mathematical equation can combine the semi-physical method of $NO_x$ generation with the statistical method, so as to optimize the SNCR system as a whole more effectively and economically.

Furthermore, the initial nitrogen oxides emission is expressed by the following equation:

$$[NO]_0 = \left(b_1 + b_2[H2O] + b_3[FC] + b_4 ln\left(FR/_{FN}\right)\right) \times \left(100 - 6/_{100 - \%O_2}\right)^u$$

wherein FC stands for fixed carbon content, FR stands for the ratio fixed carbon/volatile matter, *FN* stands for nitrogen content in the fuel, and $b_{1-4}$ and *u* are coefficients to be determined during the calibration step.

Although these artificial coefficients have no necessarily physical sense, they are proved to have a positive contribution to the R-squared. For instance, the impact of boiler load and oxygen content in flue gas are embedded into the coefficient u and other aspects, even if there is no clear physical sense why u has a power contribution to the overall initial NOx emission level.

Optionally, in the method according to the present invention, $a_{L_i} = A_{Li} \times Eff_{L_i}(T)$ wherein $A_{Li}$ is an artificial coefficient representing partially the contribution of each lance, and $Eff_{L_i}(T)$ is an effect function of temperature, for example, it varies between 0-1. In this way, $a_{L_i}$ can be determined only by installing some low-cost thermocouples on the boiler wall to obtain low-precision measured temperatures.

Advantageously, in the method according to the resent invention, the calibration is obtained by means of:

- least square curve fitting technique;

- minimise objective function using a gradient based method; and/or

- minimise objective function using an evolutionary algorithm.

Advantageously, in the method according to the resent invention, the initial coefficients are generated by randomly guess and are determined by lsqucrvefit function.

Advantageously, in the method according to the resent invention, the operating data comprises:

- lance opening position;

- temperature in the boiler;

- reagent amount;

- dilution water amount;

- oxygen content;

- boiler load;

- fuel composition;

- fuel proximate and ultimate analysis;

- grate vibrating parameter;

- NOx level; and/or

- SOx and dust levels.

Advantageously, in the method according to the resent invention, the plurality of lances are distributed in at least three different levels in the boiler. That is, at least 3 levels are arranged, and 8-10 lances are arranged in each level, for example.

Advantageously, in the method according to the resent invention, after the optimization, less than half the lances are determined to be involved in the operation.

Based on the abovementioned method according to the present invention, the present invention can upgrade the traditional SNCR system by means of algorithms without substantial additional hardware investment, so as to improve efficiency. This overcomes the problem that conventional SNCR operation cannot provide sufficient efficiency to meet the latest NOx emission control standards. In addition, the present invention is particularly advantageous for small boilers because its cost control is more important.

According to another aspect of the present invention, the present invention further proposes an apparatus, which comprises a processor configured to execute instructions stored on a computer-readable medium to perform the abovementioned method.

The characteristics and advantages of other aspects of the present invention will be discussed in the following embodiments. Those skilled in the art can clearly understand the content of the present invention and the technical effects obtained based on these exemplary embodiments.

**BRIEF DESCRIPTION OF THE DRAWINGS**

It should be understood that, in the present invention, all features, modifications, and/or specific embodiments can be combined according to various combinations except for obvious contradictions or incompatibility.

The other features and advantages of the present invention will be apparent by referring to the following specific embodiments without limiting the invention, in conjunction with the accompanying drawings, in which:

- Fig. 1 is a flowchart of an embodiment according to the present invention.

- Fig. 2 exemplarily shows the relationship between $NO_x$ removal rate and temperature.

- Fig. 3A exemplarily shows the arrangement of lances on the boiler wall in the SNCR system according to an embodiment of the present invention.

- Fig. 3B exemplarily shows the method according to the present invention to determine the lances to work in Fig. 3A to achieve the smallest amount of reagent injection.

**DESCRIPTION OF EMBODIMENTS**

The following are exemplary embodiments according to the present invention. The relevant definitions below are used to describe exemplary embodiments, rather than to limit the scope of the present invention. Since the embodiments described here are exemplary, they can also be extended to modifications related to the function, purpose, and/or structure of the present invention.

As mentioned above, the present invention can improve the efficiency of the SNCR system by means of the method of the present invention without substantial hardware modification of the existing SNCR system.

Therefore, the present invention mainly relates to controlling the operation of the lance in the SNCR system through an algorithm based on mathematical formulas. The formula can comprise a mathematical expression that uses as much boiler input as possible to describe the NOx content observed after the operation of the SNCR.

To describe the above operation, it is first necessary to estimate initial NOx emission and SNCR reaction. According to the present invention, a semi-physical model can be created for this estimation.

The NOx emission follows complex mechanisms and there is no confirmed physical model to handle variable fuel input and unstable boiler load. In the art, some researchers tried to show that the NOx emission could be described as a simple function of Nitrogen content in the fuel, or volatility (ratio of volatile material over fixed carbon). However, these correlations have been only validated in lab scale with pure single fuel. In addition, the coefficient of determination R-squared are most of time lower than 0.7, which suggests the model can only approximately explain the observation. Efforts have also been made to include more parameters in the correlation to achieve an R-squared ~ 0.8.

Based on the above, the invention has made further innovations, i.e. describing the initial NOx emission $[NO]_0$ as the following Equation 1:

$$[NO]_0 = \left(b_1 + b_2[H2O] + b_3[FC] + b_4 ln\left(FR/FN\right)\right) \times \left(100 - 6/100 - \%O_2\right)^u$$

Equation 1

Where *FC* stands for fixed carbon content, FR for the ratio fixed carbon/volatile matter, *FN* for nitrogen content in the fuel, and and *u* are the coefficients to be determined. In the equation, the part before the multiplication sign refers to a physical analysis of the fuel and NOx emission phenomena, while the remaining part behind the multiplication sign contains artificial coefficients which do not have physical sense. Although these artificial coefficients in the equation have no necessarily physical sense but are proved to have a positive contribution to the R-squared. For instance, the impact of boiler load and oxygen content in flue gas are embedded into the coefficient u and other terms where u has a power contribution to the overall initial NOx emission level, without having a clear physical sense. Of course, other expressions can be used to replace the Equation 1 in order to form a similar semi-physical model.

Based on Equation 1, in a similar way, the NOx level (represented by $[NO]$) after SNCR operation (wherein $m$ lances are installed) can be described by the following Equation 2:

$$[NO] = [NO]_0 - \sum_{i=1}^{m} a_{L_i}[NH3]_i$$

### Equation 2

Where $[NH3]$ is the ammoniac flowrate provided by each lance and $a_{L_i}$ is a combination of artificial coefficients to represent contributions of each SNCR lance.

It can be noted that one important factor, temperature, is not explicit in the expression. Therefore, in the implementation of the present application, it is not necessary to obtain precise temperature measurements by means of expensive devices (such as AGAM technology) as previously explained. The present invention smartly incorporates the impact of position of the lance and impact of temperature at the lace position into a mathematical coefficient $a_{L_i}$.

Optionally, to assist the determination of the coefficient $a_{L_i}$, one can install some low-cost thermal couples on the boiler wall in order to measure some approximate temperatures. In that case, $a_{L_i}$ could be refined in the following Equation 3:

$$a_{L_i} = A_{L_i} \times Eff_{L_i}(T)$$

### Equation 3

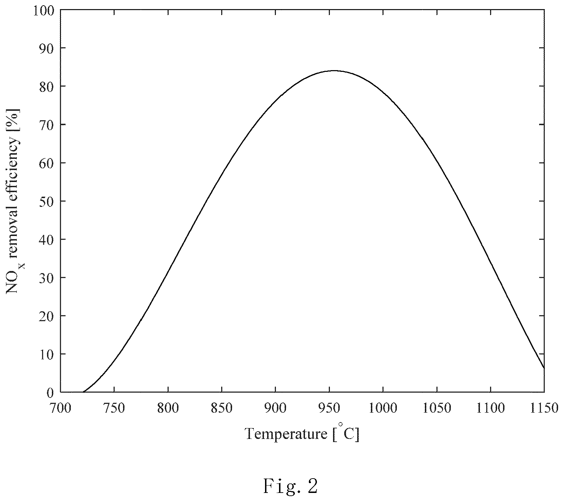

$Eff_{L_i}(T)$ could be a influence function of temperature varying from 0 to 1 following a law as shown in Figure 2, which shows the variation of the efficiency coefficient $Eff_{L_i}(T)$ as a function of temperature. $A_{L_i}$ is another artificial coefficient to represent partially the contribution of each SNCR lance. Of course the influence function can also relate to other parameters and is not limited to temperature.

Since the measurements of thermal couples are not always reliable, it is not certain that the option above would provide a positive distribution to the calculation and the base design is more recommended.

Optionally, it is also possible to use a pure artificial intelligence (AI) model to replace the Equation 2. However, it should be noted that an AI model training requires much more computational time and more powerful workstations. A semi-physical model with partial mathematics according to the present invention will dramatically reduce the difficulties in calculation.

An embodiment of the method according to the present invention will be described in detail below.

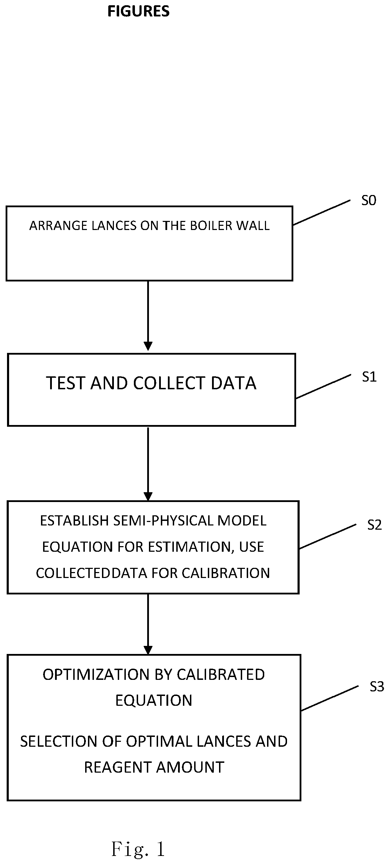

Fig. 1 shows a flowchart according to an embodiment of the present invention, which includes logical steps S0 to S3.

First, in step S0, lances need to be arranged on the boiler wall.

Although the present invention can be implemented in the existing SNCR systems, the invention advises to install more spare lances on the boiler. For example, in a 30MW boiler, it is recommended to install 24 lances on 3 walls (left-side, front-side and right-side walls). In particular, based on the temperature distribution of nominal fuel input, it is recommended to install at least on 3 layers by keeping at least 1 meter between each layer and respecting other construction constraints, such as keep distance from burnout zone, etc. Generally, 8-10 lances over a single layer are a good practice for such size of boiler. Compared with the boilers in the art, it may be necessary to add more than 10 lances, whereas it is only quite a small investment compared to the whole cost of the SNCR system. The invention could also be implemented in an existing SNCR configuration. In the case of single layer installed in a SNCR system, it is recommended to install one layer above and another one below to form a 3-layer configuration, respecting construction constraints. In the case of double layer installed in a SNCR system, it is not recommended to install a third layer between the two existing layers but above or below them.

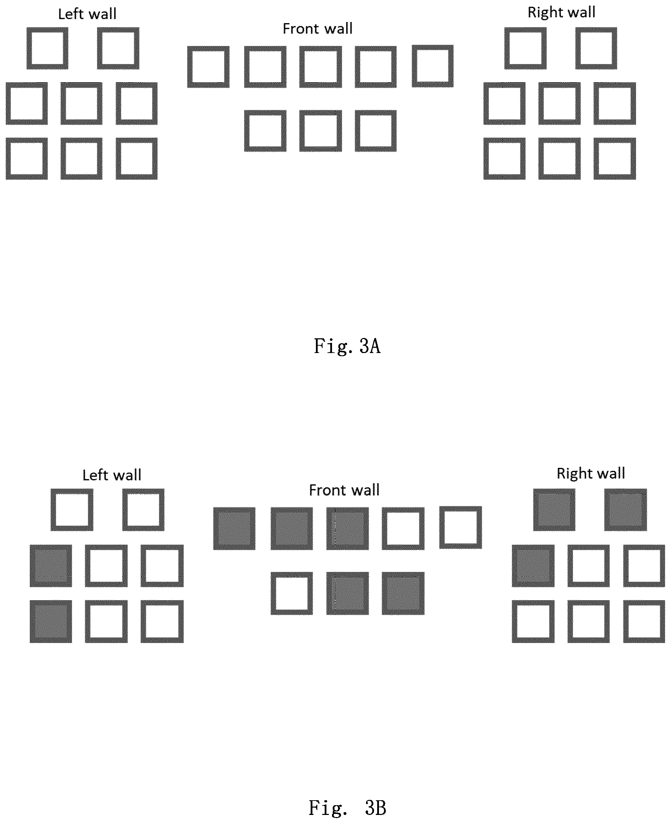

Fig. 3 exemplarily shows the arrangement of 24 lances in a 30MW boiler. The 30MW boiler is a water-cooled grate boiler. According to the design of the boiler, only 3 walls can be used to install lances, and the last wall is directly attached to the flue gas channel (superheaters). Therefore, the 24 lances are arranged at different levels of the left side wall, the front side wall and the right side wall as shown in Fig. 3.

Then, in step S1, tests are performed, and data are collected.

In particular, once the lances have been installed on the boiler, a test campaign is set to collect as many operating data as possible. In a test campaign, the boiler is operating as in normal operation and all installed lances are opened in a random way, i.e., each lance's opening times are approximately equal. At each reporting interval, some or all of the following data will be collected:

- Each lance opening level;

- All available temperature measurements in the boiler if available;

- NH3 amount;

- Dilution water amount (if any);

- Oxygen content in all available measurements (if any);

- Boiler load;

- Fuel composition;

- Fuel proximate and ultimate analysis;

- Grate vibrating parameter (depending on the type of boiler);

- Observed NOx level; and/or

- Observed SOx and dust levels.

It is recommended to collect at least 20 000 series of data with a reporting interval between 1 and 5 minutes. The more data are collected, the more reliable optimisation can be provided by the algorithm of the present invention. Nevertheless, many series will slow down the calculation. It is not recommended to use more than 1 million series of data for a single calculation. On the other hand, it doesn't make sense to reduce the reporting interval to small values, such as 5s to increase the total amount of series. Relatively large reporting interval is helpful in reducing instability of measurement.

After collecting the abovementioned data, in step S2, a semi-physical model Equation 2 is established to estimate the initial NOx emission and the NOx content after the operation of the SNCR system. Then the collected data are used to calibrate the Equation 2.

The calibration can be done by the following techniques:

• Least square curve fitting technique;

• Minimise objective function using a gradient based method; and/or

• Minimise objective function using an evolutionary algorithm.

Of course, other calibration algorithms can also be used in the present invention.

For a 30MW water cooled grate boiler containing 24 lances, there are around 30 mathematical coefficients to determine, including $A_{L1-24}$, $b_{1-4}$ and $u$.

It can be noted that the performance of calibration techniques depends on the complexity of the problem. For using least square curve fitting technique, it takes around 30 minutes computational time to calibrate 20 000 series of data in Matlab environment.

Optionally, it is possible to recalibrate the mathematical coefficients based on new data. It is recommended to redo the calculation on a 7-day basis in order to minimise the fluctuation of the operation and other external impacts.

An example of determining the coefficients of the Equation is given below.

Table 1 lists the boundary conditions for the artificial coefficients, where the initial guesses are generated randomly in the interval.

Table 1

| $A_{L1-8}$ | 0-10 |
|---|---|
| $A_{L9-16}$ | 0-10 |
| $A_{L17-24}$ | 0-10 |
| $b_{1-4}$ | 1E-04 - 100 |
| $u$ | 0.1 - 10 |

In an embodiment according to the present invention, 80 000 series of minute-level data were collected from a local distributed control system (DCS) in a 30 MW water-cooled grate boiler after 2 months of testing. Based on these data, the artificial coefficients are thus determined using lsqcurvefit function of Matlab, for example as shown in Table 2.

Table 2

| $A_{L1-8}$ | 7.60E-09 | 2.00E-06 | 3.00E-09 | 3 | 1.10E-07 | 0.15 | 2.3 | 2.60E-06 |
|---|---|---|---|---|---|---|---|---|
| $A_{L9-16}$ | 0.49 | 1.2 | 2.50E-09 | 2.6 | 2.90E-08 | 0.61 | 3.90E-06 | 2.70E-09 |
| $A_{L17-24}$ | 0.45 | 1.40E-05 | 0.27 | 7.80E-06 | 2.90E-10 | 0.31 | 3.10E-08 | 0.34 |
| $b_{1-4}$ | 55.3 | 1.27E-05 | 1.18E-05 | 10.7 | | | | |
| $u$ | 0.897 | | | | | | | |

It should be noted that the calculations can be done on an ordinary personal computer in a reasonable amount of time due to the use of artificial coefficients and semi-physical models. After completing the above steps, the NOx emissions can be accurately described by a continuous calibrated mathematical expression (Equation 2). From there, an optimizer can be applied to determine the desired optimal operating conditions in step S3.

For example, the amount of reagent NH3 can be minimized while considering the emission control level and the flow rate of each lance. The mathematical approach is as follows:

*min* NH3 amount

$$\text{subject to} \begin{cases} [NO] \leq \text{emission control} \\ \min \leq \text{lance flowrate} \leq \max \end{cases}$$

For another example, the amount of It is also possible to minimise the NOx emission while respecting a given maximum reagent amount (usually represented by NSR) and flowrates of each lance. The mathematical approach is as follows:

*min* [*NO*] level

$$\text{subject to} \begin{cases} \text{NH3 amount} \leq \text{NSR} \\ \min \leq \text{lance flowrate} \leq \max \end{cases}$$

Exemplarily, particle swarm optimization technique of Matlab can be used to minimize the overall amount of reagent. With the optimization, the invention suggests that 10 of the 24 installed lances in use, with their specific selection locations shown in FIG. 3A, where the solid boxes are the selected lances, i.e., 10 of the 24 lances are selected for use to reduce the amount of NH3 used. Under this optimization, NH3 amount was reduced to half when NOx emission levels were maintained at standard value.

In summary, the present invention does not require substantial changes to the hardware of the SNCR system, simply installing additional lances on the boiler walls as needed, which represents a small fraction of the total cost of the SNCR system. In the art the SNCR operation is assisted by estimating NOx emission levels from purely physical models. However, such purely physical model estimates require expensive high-precision temperature measurement equipment and extensive calculations, and do not provide reliable results under the high dynamics of the boiler. The present invention cleverly creates artificial mathematical coefficients to improve the reliability of the model in NOx emission level estimation, but does not attempt to find the physical meaning of these coefficients. Thus, the present invention does not require high precision temperature measurements and provides reliable results at low cost and can be successfully adapted to the high dynamic characteristics of boilers.

Those skilled in the art may envisage other various embodiments and various modifications and improvements, such as using other semi-physical models with different mathematical artificial coefficients to better calculate NOx. In addition, it should be noted that, except for obvious contradictions or incompatibility, the features, modifications, and/or specific embodiments described in the present invention can be combined with each other. All these embodiments and modifications and improvements fall in the protection scope of the present invention.

**Claims**

1. Method of controlling lances in a SNCR system, wherein the SNCR system comprises a plurality of lances which are configured to be distributed at different levels inside a boiler of the SNCR system and are configured to inject reagent into the boiler to remove nitrogen oxides in nitrogen oxide-containing flues gases, and the method comprises:

   - collecting operating data when the boiler is operating in a normal operation and the lances are opened in a random way;
   - estimating nitrogen oxides level after an operation of the SNCR system by a mathematical equation, wherein in the mathematical equation the nitrogen oxides level is in function of initial nitrogen oxides emission before SNCR system operation;
   - calibrating the mathematical equation using the collected operating data; and
   - optimizing lance operation by means of the calibrated mathematical equation to determine the lances and the amount of reagent to be used, so as to lower the amount of reagent to be injected and/or increase the removal of the nitrogen oxides.

2. The method of controlling lances in a SNCR system according to claim 1, wherein the reagent is NH3 and the mathematical equation is:

$$[NO] = [NO]_0 - \sum_{i=1}^{m} a_{L_i}[NH3]_i$$

   wherein [*NO*] is the nitrogen oxides level after the operation of the SNCR system, [*NO*]$_0$ is the initial nitrogen oxides emission before the operation of the SNCR system, $a_{Li}$ is a combination of artificial coefficients to represent contributions of each SNCR lance, m is the number of the lances in the boiler, and *[NH3]* is the flow rate of NH$_3$ injected by each lance.

3. The method of controlling lances in a SNCR system according to claim 2, wherein the initial nitrogen oxides emission is expressed by the following equation:

$$[NO]_0 = \left( b_1 + b_2[H2O] + b_3[FC] + b_4 ln\left( {FR}/{FN} \right) \right) \times \left( {100 - 6}/{100 - \%O_2} \right)^u$$

   wherein *FC* stands for fixed carbon content, *FR* stands for the ratio fixed carbon/volatile matter, *FN* stands for nitrogen content in the fuel, and $b_{1-4}$ and *u* are coefficients to be determined during the calibration step.

4. The method of controlling lances in a SNCR system according to claim 2, wherein

$$a_{L_i} = A_{L_i} \times Eff_{L_i}(T)$$

   wherein $A_{Li}$ is an artificial coefficient representing partially the contribution of each lance, and $Eff_{Li}(T)$ is an effect function of temperature.

5. The method of controlling lances in a SNCR system according to any one of claims 1 to 4, wherein the calibration is obtained by means of:

   - least square curve fitting technique;

- minimise objective function using a gradient based method; and/or
- minimise objective function using an evolutionary algorithm.

6. The method of controlling lances in a SNCR system according to any one of claims 2 to 4, wherein the initial coefficients are generated by randomly guess and are determined by lsqucrvefit function.

7. The method of controlling lances in a SNCR system according to claim 1, wherein the operating data comprises:

- lance opening level;
- temperature in the boiler;
- reagent amount;
- dilution water amount;
- oxygen content;
- boiler load;
- fuel composition;
- fuel proximate and ultimate analysis;
- grate vibrating parameter;
- NOx level; and/or
- SOx and dust levels.

8. The method of controlling lances in a SNCR system according to claim 1, wherein the plurality of lances are distributed in at least three different levels in the boiler.

9. The method of controlling lances in a SNCR system according to claim 1, wherein after the optimization, less than half the lances are determined to be involved in the operation.

10. An apparatus comprising a processor configured to execute instructions stored on a computer-readable medium to perform the method according to claim 1.

**FIGURES**

Fig. 1

Fig. 2

Left wall

Front wall

Right wall

Fig. 3A

Left wall

Front wall

Right wall

Fig. 3B

Europäisches
Patentamt

European
Patent Office

Office européen
des brevets

## EUROPEAN SEARCH REPORT

Application Number

EP 21 21 4211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2006/026479 A2 (NEUCO INC [US]; LEFEBVRE W CURT [US]; KOHN DANIEL W [US]) 9 March 2006 (2006-03-09) * paragraphs [0014], [0015], [0017], [0019], [0025], [0038] – [0040] * | 1-10 | INV. B01D53/56 B01D53/79 F23J15/00 |
| A | CN 111 460 726 A (UNIV HANGZHOU DIANZI) 28 July 2020 (2020-07-28) * paragraphs [0005] – [0014] * | 1-10 | |
| A | CN 104 001 420 A (YANCHENG INST TECHNOLOGY) 27 August 2014 (2014-08-27) * paragraphs [0008] – [0012], [0038] – [0058] * | 1-10 | |
| A | CN 111 459 109 A (UNIV SOUTH CHINA TECH) 28 July 2020 (2020-07-28) * paragraphs [0009] – [0015], [0023] – [0025], [0039] – [0043], [0067], [0068] * | 1-10 | |
| A | CN 111 505 940 A (UNIV SHANDONG JIAOTONG) 7 August 2020 (2020-08-07) * paragraphs [0007] – [0014] * | 1-10 | TECHNICAL FIELDS SEARCHED (IPC) B01D F23J |

The present search report has been drawn up for all claims

| Place of search | Date of completion of the search | Examiner |
|---|---|---|
| The Hague | 4 May 2022 | Hackenberg, Stefan |

## ANNEX TO THE EUROPEAN SEARCH REPORT
## ON EUROPEAN PATENT APPLICATION NO.

EP 21 21 4211

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2022

| Patent document cited in search report | | Publication date | Patent family member(s) | | Publication date |
|---|---|---|---|---|---|
| WO 2006026479 | A2 | 09-03-2006 | US 2006052902 A1<br>WO 2006026479 A2 | | 09-03-2006<br>09-03-2006 |
| CN 111460726 | A | 28-07-2020 | NONE | | |
| CN 104001420 | A | 27-08-2014 | NONE | | |
| CN 111459109 | A | 28-07-2020 | NONE | | |
| CN 111505940 | A | 07-08-2020 | NONE | | |

EPO FORM P0459

For more details about this annex : see Official Journal of the European Patent Office, No. 12/82